(19) Europäisches Patentamt
European Patent Office
Office européen des brevets

(11) Publication number: 0 156 103
A1

# (12) EUROPEAN PATENT APPLICATION

(21) Application number: 85100342.6

(22) Date of filing: 15.01.85

(51) Int. Cl.[4]: C 08 G 63/64

(30) Priority: 24.01.84 US 573358

(43) Date of publication of application:
02.10.85 Bulletin 85/40

(84) Designated Contracting States:
DE FR GB IT NL

(71) Applicant: GENERAL ELECTRIC COMPANY
1 River Road
Schenectady New York 12305(US)

(72) Inventor: Fox, Daniel Wayne
193 Dawes Avenue
Pittsfield Massachusetts 01201(US)

(72) Inventor: Kaduk, Bruce Alexander
124 Promethean Way
Mt. View California 94043(US)

(72) Inventor: Starr, John Bronislaw Jr.
68 Anita Drive
Pittsfield Massachusetts 01201(US)

(74) Representative: Schüler, Horst, Dr. et al,
Kaiserstrasse 41
D-6000 Frankfurt/Main 1(DE)

## (54) Process for the polymerization of polyester-carbonates.

(57) A novel process is described for the preparation of a polyester-carbonate by transesterification at temperatures in excess of the melting point of the reaction mixture.

EP 0 156 103 A1

Croydon Printing Company Ltd.

10391-8CT-03389 0156103

# PROCESS FOR THE POLYMERIZATION OF POLYESTER-CARBONATES

This invention relates to a novel process for the polymerization of polyester-carbonates by transesterification in the absence of a solvent.

## BACKGROUND OF THE INVENTION

Polyester-carbonates are known thermoplastic polymers that have been described in the literature. See for example the Goldberg patents, U.S. Patent Nos. 3,169,121; 3,153,008; 3,207,814 and 3,030,331, which are incorporated by reference.

The methods for making polyestercarbonates that have been employed have been in the presence of a solvent and an amine or in an interfacial aqueous caustic-methylene chloride system utilizing triethylamine as a catalyst. Goldberg in U.S. Pat. No. 3,169,121 states that polyester-carbonates may be prepared by reaction of a difunctional acid, a dihydric phenol and a diaryl carbonate under ester exchange conditions. No mention is made of the conditions and no example of an ester exchange reaction is given.

The applicants have discovered that polyester-carbonates having good molding properties may be synthesized in a melt polymerization in the absence of a solvent. These polyestercarbonates have excellent hydrolytic stability. The polyestercarbonates that have a high ratio of isophthalate units to terephthalate units have high heat distortion temperatures and are particularly useful in environments where high temperatures are encountered.

DETAILED DESCRIPTION OF THE INVENTION

The invention provides a method for the polymerization of a polyestercarbonate. The method of the invention comprises:

(a) combining a dihydric phenol, one or more diaryl esters of a dicarboxylic acid and a diaryl carbonate in a reactor with a transesterification catalyst to form a reaction mixture;

(b) heating said reaction mixture to a temperature in excess of the melting point of said reaction mixture to initiate transesterification; and

(c) removing the phenolic byproducts while continuing to heat said reaction mixture to form the polyester carbonate.

The dihydric phenols that may be employed in the process may be of the formula:

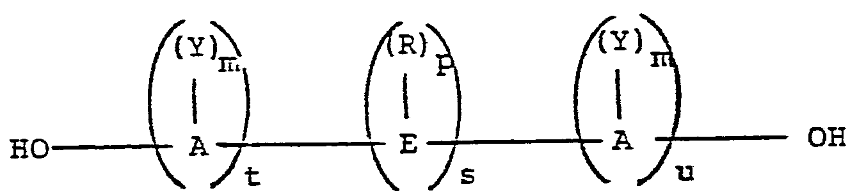

in which A is an aromatic group such as phenylene, biphenylene, naphthylene, anthrylene, etc. E may be an alkylene or alkylidene group such as methylene, ethylene, propylene, propylidene, isopropylidene, butylene, butylidene, isobutylidene, amylene, isoamylene, amylidene, isomylidine, etc. Where E is an alkylene or alkylidene group, it may also consist of two or more alkylene or alkylidene groups, connected by a non-alkylene or nonalkylidene group such as an aromatic linkage, an ether linkage, a carbonyl linkage, a silicon-containing linkage, or by a

sulfur-containing linkage such as sulfide, sulfoxide, sulfone, etc. In addition, E may be a cycloaliphatic group (e.g. cyclopentyl, cyclohexyl), a sulfur-containing linkage, such as sulfide, sulfoxide or sulfone; an ether linkage, a carbonyl group or a silicon-containing linkage such as silane or siloxy. Other groups which E may represent will occur to those skilled in the art. R is hydrogen or a monovalent hydrocarbon group such as alkyl (methyl, ethyl, propyl, etc.),aryl(phenyl, naphthyl, etc.), aralkyl(benzyl, ethylphenyl, etc.) or cycloaliphatic (cyclopentyl, cyclohexyl, etc.). Y may be an inorganic atom such as chlorine, bromine, fluorine, etc; an organic group such as R above, or any oxy group such as OR, it being only necessary that Y be inert to and unaffected by the reactants and the reaction conditions. The letter m is any whole number from and including zero through the number of positions on A available for substitution; p is any whole number from and including zero through the number of available positions on E; t is a whole number equal to at least one, s is either zero or one, and u is any whole number including zero.

In the dihydric phenol compound represented by Formula I above, when more than one Y substituent is present, they may be the same or different. The same is true for the R substituent. Where s is zero in Formula I and u is not zero, the aromatic rings are directly joined with no intervening alkylene or other bridge. The positions of the hydroxyl groups and Y on the aromatic nuclear residues A can be varied in the ortho, meta, or para positions and the groupings can be in a vicinal, ásymmetrical or symmetrical relationship, where two or more ring carbon atoms of the aromatic hydrocarbon residue are substituted with Y and hydroxyl group.

Examples of dihydric phenol compounds that may be employed in this invention include:

2,2-bis-(4-hydroxyphenyl)-propane (bisphenol-A);
2,4'-dihydroxydiphenylmethane;
bis-(2-hydroxyphenyl)-methane;
bis-(4-hydroxyphenyl)-methane;
2,2-bis-(3,5-dimethyl-4-hydroxyphenyl)-propane
1,1-bis-(4-hydroxyphenyl)-ethane;
1,2-bis-(4-hydroxyphenyl)-ethane;
1,1-bis-(4-hydroxy-2-chlorophenyl)-ethane;
1,1-bis-(2,5-dimethyl-4-hydroxyphenyl)-ethane;
1,3-bis-(3-methyl-4-hydroxyphenyl)-propane;
2,2-bis-(3-phenyl-4-hydroxyphenyl)-propane;
2,2-bis-(3-isopropyl-4-hydroxyphenyl)-propane;
2,2-bis-(4-hydroxynaphthyl)-propane;
2,2-bis-(4-hydroxyphenyl)-pentane;
2,2-bis-(4-hydroxyphenyl)-heptane;
bis-(4-hydroxyphenyl)-phenylmethane;
bis-(4-hydroxyphenyl)-cyclohexylmethane;
1,2-bis-(4-hydroxyphenyl)-1,2-bis-(phenyl)-propane;
2,2-bis-(4-hydroxyphenyl)-1-phenylpropane;

and the like. Also included are dihydroxybenzenes typified by hydroquinone and resorcinol, dihydroxydiphenyls such as 4,4'-dihydroxydiphenyl; 2,2'-dihydroxydiphenyl; 2,4'-dihydroxydiphenyl; dihydroxy-naphthalenes such as 2,6'-dihydroxynaphthalene, etc.

Examples of dihydric phenols wherein E is a sulfur containing radical are bis-(4-hydroxyphenyl)-sulfone and sulfide. The preparation of these and other sulfones is described in U.S. Pat. No. 2,288,282(Huissmann).

Dihydroxy aromatic ethers such as those set forth in U.S. Patent No. 3,148,172, are also useful. Methods of preparing such materials are found in "Chemical Reviews" 38, 414-417 (1946) and U.S. Patent No. 2,739,171-Linn. Exemplary of such dihydroxy aromatic ethers are:

4,4'-dihydroxydiphenyl ether;
4,4'-dihydroxytriphenyl ether;
the 4,3'-, 4,2'-, 4,1'-, 2,2'-, 2,3'-, etc. dihyroxydiphenyl ethers;
4,4'-dihydroxy-2,6-dimethyldiphenyl ether;
4,4'-dihydroxy-2,5-dimethyldiphenyl ether;
4,4'-dihydroxy-3,3'-diisobutyldiphenyl ether;
4,4'-dihydroxy-3,3'-diisopropyldiphenyl ether;
4,4'-dihydroxy-3,3'-dichlorodiphenyl ether;
4,4'-dihydroxy-3,3'-difluorodiphenyl ether;
4,4'-dihydroxydinaphthyl ether;
4,4'-dihydroxy-3,3'-dichlorodinaphthyl ether;
2,4'-dihydroxytetraphenyl ether;
4,4'-dihydroxypentaphenyl ether;
4,4'-dihydroxy-2,6-dimethoxydiphenyl ether;
4,4'-dihydroxy-2,5-diethoxy-diphenyl ether, etc.

Mixtures of the dihydric phenols can also be employed and where dihydric phenol is mentioned herein, mixtures of such materials are considered to be included.

The acids which are useful as their diaryl esters will generally conform to the formula:

II $$R''-\left(-R'-\right)_q-COOH$$

in which R' is an alkylene, alkylidene or cycloaliphatic group in the same manner as set out above for E in Formula I; an alkylene, alkylidene or cycloaliphatic group containing ethylenic unsaturation; an aromatic radical such as phenylene, naphthylene, biphenylene, substituted phenylene, etc.; two or more aromatic groups connected through non-aromatic linkages such as those defined by E in Formula I; an aralkyl radical such as tolylene, xylylene, etc. R" is either a carboxyl or a hydroxyl group, and q is one. Thus the dicarboxylic acid will either be a monohydroxy monocarboxylic monocarboxylic acid or a dicarboxylic acid.

Included within the scope of this invention are the saturated, aliphatic dibasic acids derived from straight chain paraffin hydrocarbons, malonic, dimethyl malonic, glutaric, adipic, pimelic, suberic, azelaic and sebacic acid.

Suitable examples of aromatic and aliphatic-aromatic dicarboxylic acids which may be used are isophthalic, terephthalic, homophthalic, o-, m-, and p-phenylenediacetic acid; the polynuclear aromatic acids such as diphenic acid, and 1,4-naphthalic acid.

Examples of aromatic hydroxy acids which may be employed include, p- and m- hydroxybenzoic acid or camphoric acid.

Other useful acids in the form of arylester derivatives may be derived from the polymerized fatty acids as, for example, those sold under the trade name "Empol" by the Emery Company, one example of which is Empol 3079-S, which is a linoleic acid dimer containing two carboxyl groups per molecule. Mixtures of the carboxylic acids can also be employed and where carboxylic acid is mentioned herein, mixtures of arylester derivatives of such materials are considered to be included.

The preferred aryl esters are phenyl and alkyl substituted phenyl such as tolyl, and the like.

The diaryl carbonate may be any diaryl carbonate that will transesterify with a diaryl phenol. Examples of suitable diaryl carbonates include di-(2-methylphenyl) carbonate; di(3-methylphenyl)carbonate; di(2,4-dimethylphenyl)carbonate; di-(4-methoxyphenyl)carbonate; di-(2-chlorophenyl)carbonate; diphenylcarbonate; and the like. The preferred diaryl carbonate is diphenyl carbonate.

The polyester carbonate reaction mixture should contain substantially equimolar amounts of the dihydric phenol in relation to the combined amounts of the diaryl carbonate and the diaryl (or diaryldicarboxylates) diester of the dicarboxylic acid.

Any operable transesterification catalyst may be utilized. Suitable transesterification catalysts include alkali metal salts such as alkali metal hydroxides such as sodium, potassium or the corresponding oxides may also be utilized as well as alkali metal salts and lithium hydroxides. These catalysts may be used at levels of from 0.05 to 0.5% by total weight of diaryl ester of a dicarboxylic acid and diaryl carbonate. The catalyst may be added as a 0.1 - 5% by weight aqueous solution.

## DESCRIPTION OF THE PREFERRED EMBODIMENT

The following examples illustrate the processes of this invention. They are merely illustrative and are not to be construed to limit the invention in any manner whatsoever.

### EXAMPLE 1

A three-necked, 500 ml round bottomed flask fitted with a one piece Claisen distilling head/ 30 cm Vigreux column, overhead paddle stirrer with vacuum-tight bearing and a nitrogen inlet serves as a reaction vessel. The flask is charged with 2,2-bis(4-hydroxyphenyl)propane (100g, 0.439 moles), diphenylcarbonate (28.6g, 0.134 moles), diphenylisophthalate (14.6g, 0.046 moles) and diphenylterephthalate (83.0g, 0.26 moles). The flask is then immersed in a 180°C.oil bath and nitrogen flush is begun. When the contents of the flask form a homogenous mixture, the stirrer is started and 0.2 ml of the catalyst solution (184 mg. $LiOH \cdot H_2O$/100 ml $H_2O$) is added.

via syringe. The temperature of the oil bath is raised as quickly as possible to 250°C. The nitrogen flow is then stopped and the pressure in the reaction vessel is reduced to about 100 mm Hg. Phenol begins distilling over at this point. When about 50 ml of phenol is collected, the pressure is reduced to about 10 mm. Hg. This reduced pressure is maintained until about 72 ml. of phenol is removed. The prepolymerization is terminated at this point. The prepolymer* is isolated by admitting nitrogen to the flask and pouring the hot prepolymerization mixture into an aluminum pan. The prepolymer forms a brittle glass (intrinsic viscosity (IV) of about 0.2 dl/g as measured in chloroform at 25°C) when cooled to room temperature.

The prepolymers were converted to high polymers (IV in excess of 0.48 dl/g as measured in chloroform at 25°C) by postpolymerizing them at a temperature of 290°C. and a pressure of 0.5 mm Hg. for approximately one hour in a test tube apparatus.

EXAMPLE 2

The prepolymer is prepared in the same manner as Example 1 except that it is done in a five liter round bottomed flask and the batches were twelve times larger than in the 500 ml. flask. The ratio of the total of diphenyldiacid esters to diphenyl carbonate was 66/34 mole % and the ratio in mole % of diphenylisophthalate to diphenylterephthalate is 15/85.

---

* Term prepolymer is used to designate a relatively low molecular weight polymer. Exact molecular weight is arbitrarily chosen to be sufficiently low to enable convenient pumping and/or pouring of molten polymer.

Approximately 1600 g. of the prepolymer material is charged to a 4CV (1 gallon) Helicone* reactor at 315°C. under a nitrogen atmosphere. The blades were started and the pressure reduced as quickly as possible to 0.5 mm Hg. Stirring is continued for approximately 1.5 hours. Vacuum is broken by a nitrogen flush and the material is stranded out the bottom of the reactor. High molecular weight polymer (IV 0.48 dl/g as measured in chloroform at 25°C. is obtained. The polymer is chopped, dried overnight at 125°C. and molded.

Table I shows the comparative glass transition temperatures of different polymers that are prepared according to the procedure of Example 1.

* Registered trademark of Atlantic Research Corp.

TABLE I

EFFECT OF ESTER/CARBONATE RATIO ON POLYMER PROPERTIES

| Sample Designation | DPI Mole % | DPT Mole % | DPC Mole % | IV($CHCl_3$) | Tg(°C) |
|---|---|---|---|---|---|
| 90(90/10)/10 | 0.81 | 0.09 | 0.10 | 0.40-0.65 | 185 |
| 90(50/50)/10 | 0.45 | 0.45 | 0.10 | 0.47-0.67 | 183-187 |
| 90(10/90)/10 | 0.09 | 0.81 | 0.10 | | |
| 70(90/10)/30 | 0.63 | 0.07 | 0.31 | 0.61,0.73 | 183 |
| 70(50/50)/30 | 0.35 | 0.35 | 0.31 | 0.54-0.79 | 187 |
| 70(10/90)/30 | 0.07 | 0.63 | 0.31 | 0.66 | |
| 50(90/10)/50 | 0.45 | 0.05 | 0.51 | 0.53 | 176 |
| 50(50/50)/50 | 0.25 | 0.25 | 0.51 | 0.40-0.70 | 179 |
| 50(10/90)/50 | 0.05 | 0.45 | 0.51 | 0.54-0.61 | 183-187 |
| 30(90/10)/70 | 0.27 | 0.03 | 0.71 | 0.53 | 166 |
| 30(50/50)/70 | 0.15 | 0.15 | 0.71 | 0.52,0.60 | 164 |
| 30(10/90)/70 | 0.03 | 0.27 | 0.71 | 0.60,0.69 | 174 |
| 10(90/10)/90 | 0.09 | 0.01 | 0.91 | | |
| 10(50/50)/90 | 0.05 | 0.05 | 0.91 | 0.47-0.64 | 157 |
| 10(10/90)/90 | 0.01 | 0.09 | 0.91 | 0.52 | 158 |
| 72(20/80)/28 | 0.144 | 0.576 | 0.28 | 0.57 | 194 |
| 72(15/85)/28 | 0.108 | 0.612 | 0.28 | 0.51-0.56 | 189-194 |
| 70(90/10)/30 | 0.63 | 0.07 | 0.30 | 0.61-0.73 | 183 |
| 70(50/50)/30 | 0.35 | 0.35 | 0.30 | 0.54-0.79 | 187 |
| 70(20/80)/30 | 0.14 | 0.56 | 0.30 | 0.49 | 185 |
| 70(15/85)/30 | 0.105 | 0.585 | 0.30 | 0.46-0.71 | 184-201 |
| 66(100/0)/34 | 0.66 | 0.00 | 0.34 | 0.43-0.47 | 174-176 |
| 66(20/80)/34 | 0.132 | 0.528 | 0.34 | 0.53-0.70 | 187-199 |
| 66(15/85)/34 | 0.099 | 0.561 | 0.34 | 0.41-0.59 | 181-192 |

Table I shows the effect of ester/carbonate ratios on polymer intrinsic viscosity and the glass transition temperature. The general trends are the higher the ester content or the diphenylterephthalate content, the higher the glass transition temperature. If the amount of diphenylterephthalate is greater than 0.6 mole percent, the polymer may crystallize from the melt.

Table II shows the effect of ester/carbonate ratios on polymer properties and lists the number average and weight average molecular weights.

TABLE II

Effect of Ester/Carbonate Ratio on Polymer Properties

| Sample Designation | DPI Mole % | DPT Mole % | DPC Mole % | IV | Tg(°C) | $\bar{M}n$* | $\bar{M}w$** | Poly-dispersity |
|---|---|---|---|---|---|---|---|---|
| 75(100/0)/25 | 0.75 | 0.00 | 0.25 | 0.42,0.44 | 180,179 | 8700<br>9600 | 25,000<br>24,600 | 2.87<br>2.56 |
| 75(50/50)/25 | 0.375 | 0.375 | 0.25 | 0.44,0.48 | 185,186 | 9400<br>11,200 | 21,300<br>24,800 | 2.03<br>2.22 |
| 75(0/100)/25 | 0.00 | 0.75 | 0.25 | | | | | |
| 50(100/0)/50 | 0.50 | 0.00 | 0.50 | 0.34<br>0.29 | 165<br>158 | 8600<br>4600 | 17,000<br>11,700 | 1.97<br>2.54 |
| 50(50/50)/50 | 0.25 | 0.25 | 0.50 | 0.50<br>0.47 | 177<br>173 | 12,700<br>10,800 | 29,300<br>26,000 | 2.30<br>2.40 |
| 50(0/100)/50 | 0.00 | 0.50 | 0.50 | 0.39<br>0.38 | 168<br>168 | 8,900<br>7,800 | 16,500<br>16,800 | 1.85<br>2.16 |
| 25(100/0)/75 | 0.25 | 0.00 | 0.75 | 0.41<br>0.38 | 159<br>159 | 6,600<br>9,900 | 18,700<br>21,600 | 2.82<br>2.40 |
| 25(50/50)/75 | 0.125 | 0.125 | 0.75 | 0.42<br>0.46 | 162<br>165 | 8,900<br>9,400 | 21,500<br>24,800 | 2.42<br>2.62 |
| 25(0/100)/75 | 0.00 | 0.25 | 0.75 | 0.45<br>0.47 | 167<br>167 | 10,200<br>9,900 | 23,000<br>23,800 | 2.26<br>2.41 |

* molecular weight (number average)
** molecular weight (weight average)

EXAMPLE 3

A polyestercarbonate was prepared in an apparatus arranged in accordance with the schematic of the drawing. Formulation vessels 2 and 4 are initially charged with 27.9 pounds (58.2 moles) of diphenyl carbonate, 97.2 pounds (193.5 moles) of 2,2-bis(4-hydroxyphenyl)propane and 94.7 pounds (135.5 moles) of diphenylisophthalate). One formulation vessel is charged while the other is drained. Hot oil is used to heat the formulation to about 200°C. under a nitrogen blanket. Catalyst is fed from feed tank 6 to pump 8 to a reactor 10 that is held at a temperature of 210°C. and a pressure of 769 mm Hg. Line 12 is connected to vacuum line 14 for withdrawal of phenol as are lines 13, 15, 17 and 19. Reactor 18 is held at 250°C. and a pressure of 200 mm Hg. and the product is passed through line 20 to reactor 22. Reactor 22 is held at a temperature of 260°C. and a pressure of 15 mm Hg. and acts as a flasher. The output of reactor 22 is passed subsequently to wipe film evaporators 26 and 30. Wiped film evaporator 26 is held at 290°C and 1 mm of Hg. and wiped film evaporator 30 is held at 300°C. and 0.3 - 0.4 mm Hg. The catalyst was a 1% by weight solution of $LiOH \cdot H_2O$ that is fed at a flow rate of $2.5 \times 10^{-5}$ moles of catalyst mole of 2,2-bis (4-hydroxyphenyl)propane per hours. After 24 hours of operation the monomer feed was changed by replacing 85% of the diphenyliosphthalate feed with diphenylterephthalate and the process was continued for 17.5 hours.

The chemical properties for the various products are reported in Table III.

PROPERTIES OF POLYMER PRODUCED IN EXAMPLE 3

TABLE III

| TIME | IV | % ESTER | Tg (°C) | $\bar{Mn}$ ($x10^3$) | $\bar{Mw}$ ($x10^3$) | $\bar{Mw}/\bar{Mn}$ |
|---|---|---|---|---|---|---|
| DAY 1 | | | | | | |
| 0830 | 0.51 | - | 166.1 | 10.6 | 28.3 | 2.7 |
| 0930 | 0.46 | - | 167.2 | 7.5 | 24.5 | 3.3 |
| 1030 | 0.43 | - | 166.8 | 9.3 | 18.3 | 1.7 |
| 1630 | 0.44 | - | 177.1 | 10.3 | 22.9 | 2.2 |
| 1830 | 0.39 | - | 177.4 | 12.8 | 23.2 | 1.9 |
| 1930 | 0.46 | - | 176.8 | 12.1 | 25.6 | 2.1 |
| 2030 | 0.51 | 69.8 | 180.1 | 14.3 | 28.2 | 2.0 |
| 2130 | 0.51 | - | 180.1 | 17.6 | 32.1 | 1.8 |
| 2230 | 0.47 | - | 178.5 | 10.9 | 26.2 | 2.4 |
| 2330 | 0.51 | 68.6 | 179.5 | 11.3 | 29.2 | 2.6 |

TABLE III (CONT'D)

| DAY 2 | IV | % ESTER | Tg(°C) | $\bar{Mn}$ ($x10^3$) | $\bar{Mw}$ ($x10^3$) | $\bar{Mw}/\bar{Mn}$ |
|---|---|---|---|---|---|---|
| 0030 | 0.50 | - | 179.2 | 9.5 | 28.5 | 3.0 |
| 0130 | 0.50 | - | 180.3 | 11.8 | 29.9 | 2.5 |
| 0230 | 0.48 | 68.6 | 178.9 | 11.2 | 26.0 | 2.3 |
| 0330 | 0.49 | - | 179.4 | 11.6 | 28.4 | 2.4 |
| 0430 | 0.50 | - | 179.4 | 13.0 | 27.2 | 2.1 |
| 0530 | 0.49 | - | 181.0 | 13.8 | 28.0 | 2.0 |
| 0630 | 0.52 | - | 179.6 | 13.3 | 29.2 | 2.2 |
| 0730 | 0.49 | - | 179.0 | 12.4 | 29.0 | 2.3 |
| 1030 | 0.51 | - | 183.5 | 11.8 | 24.3 | 2.1 |
| 1230 | 0.53 | - | 187.8 | 14.6 | 26.2 | 1.8 |
| 1330 | 0.54 | - | 189.6 | 10.8 | 24.2 | 2.2 |
| 1430 | 0.51 | - | 190.0 | 9.4 | 24.1 | 2.6 |
| 1530 | 0.54 | - | 187.8 | 11.0 | 23.1 | 2.2 |
| 1630 | 0.53 | - | 190.3 | 10.2 | 22.6 | 2.2 |
| 1730 | 0.51 | - | 191.3 | 9.0 | 20.7 | 2.3 |

The physical properties of certain of the polyestercarbonates are set forth in Table IV.

TABLE IV

| | | Melt Polymerization (70(100/0)/30) | | | Melt Polymerization (70(15/85)/30) | | | |
|---|---|---|---|---|---|---|---|---|
| | | 2030 Hrs. | 2330 Hrs. | 0230 Hrs. | 1030 Hrs. | 1230 Hrs. | 1630 Hrs. | 1730 Hrs. |
| % Ester, by IR (mole %) | | 69.8 | 68.6 | 68.6 | -- | 71.6 | -- | 70.6 |
| DTUL @264 psi, 1/8" | | 159°C | 159°C | 154°C | 159°C | 161°C | 167°C | 162°C |
| 1/8" NI ft-lbs/in. notch | | 8.1 | 6.5 | 5.1 | 6.5 | 6.0 | 5.3 | 4.8 |
| YI @650°F, 1/8" | | 39.5 | 37.2 | 29.3 | 38.9 | 58.4 | 50.9 | 53.7 |
| UL-94, 1/8" | | V-2 | V-2 | V-2 | V-2 | V-2 | V-2 | V-2 |
| KI | | 32,310 | 30,420 | 22,260 | 45,310 | 77,030 | 89,425 | 60,225 |
| % Transmission | | 76.3 | 78.4 | 80.0 | 77.6 | 70.2 | 72.3 | 71.7 |
| % Haze | | 0.5 | 0.3 | 0.5 | 0.3 | 0.4 | 0.8 | 0.3 |
| Hydrolytic Stability Results | | | | | | | | |
| Initial %T (IV) | 88.3(.51) | 77.1(0.52) | 78.4(0.52) | 79.6(ND)* | 77.8(0.46) | 70.0(ND) | 72.1(0.52) | 72.1 (ND) |
| 66 hrs %T (IV) | 62.3(.42) | 77.0(0.46) | 78.5(0.45) | 79.8(ND) | 77.8(0.46) | 70.4 (ND) | 72.0(0.47) | 70.4 (ND) |

*ND - Not Determined

CLAIMS

1. A method for the polymerization for a polyester-carbonate which comprises:

(a) combining a dihydric phenol, one or more diaryl esters of dicarboxylic acids and a diaryl carbonate in a reactor with a transesterification catalyst to form a reaction mixture;

(b) heating said reaction mixture to a temperature in excess over the melting point of said reaction mixture under reduced pressure to facilitate transesterification; and

(c) removing the phenolic byproducts while continuing to heat said reaction mixture to form the polyester-carbonate.

2. A method for the polymerization of a polyester-carbonate as defined in Claim 1 wherein the dihydric phenol is of the formula:

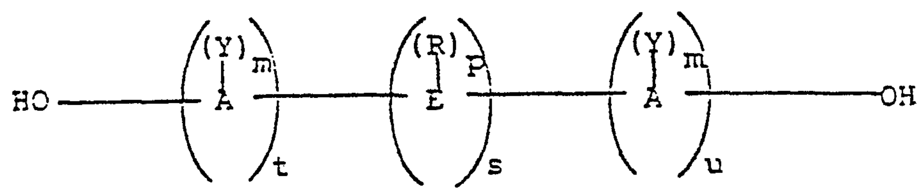

wherein A is an aromatic group; E is alkylene, alkylidene, two or more alkylidene groups connected by an aromatic linkage, an ether linkage, a carbonyl linkage, a silicon-containing linkage, or a sulfur-containing linkage, a cycloaliphatic linkage, a sulfur-containing linkage, an ether linkage, a carbonyl group or a tertiary nitrogen group; R is hydrogen or alkyl, aralkyl or cycloaliphatic; Y may be chlorine, bromine, fluorine, or wherein R is the same as set forth above; m is zero or a number from 1 to the number available positions on A; p is zero or a number from 1 to the number of available positions on A; t is a whole number equal to 1; s is zero or 1 and us is any whole number including zero.

3. A method for the polymerization of a polyester-carbonate as defined in Claim 2 wherein the dicarboxylic acid portion of the diaryl ester is derived from a dicarboxylic acid of the formula:

$$R''\text{———}(R')_q\text{———}COOH$$

wherein R' is alkylene, alkylidene, or cycloaliphatic, an alkylene, alkylidene or cycloaliphatic group which contains ethylenic unsaturation; an aromatic group; two or more aromatic groups connected by an ether linkage, a carbonyl linkage, a silicon-containing linkage, a sulfur-containing linkage or a cycloaliphatic linkage; or an aralkyl group; R" is either carboxyl or hydroxyl; and q is one.

4. A method as defined in Claim 3 wherein the diaryl ester is a diphenyl ester.

5. A method for the polymerization of a polyester-carbonate as defined in Claim 3 wherein the method includes a prepolymerization step at a temperature of 240-270°C and a postpolymerization step at 275°-310°C.

6. A method for the polymerization of a polyester-carbonate as defined in Claim 3 wherein the dihydric phenol is 2,2-bis(4-hydroxyphenyl)propane.

7. A method for the polymerization of a polyester-carbonate as defined by Claim 3 wherein the diaryl ester of a dicarboxylic acid is diphenyl isophthalate, diphenyl terephthalate or a mixture thereof.

8. A method for the polymerization of a polyester-carbonate as defined in Claim 3 wherein a catalyst is employed that is selected from the group consisting of sodium, potassium or lithium oxides, hydroxides or salts.

9. A method for the polymerization of a polyester-carbonate which comprises:

(a) combining 2,2-bis(4-hydroxyphenyl)propane, diphenyl carbonate, and a member of the group consisting of diphenyl terephthalate, diphenylisophthalate or mixtures thereof in a reactor to form a reaction mixture;

(b) heating said reaction mixture to a temperature of 180°C to 240°C under reduced pressure;

(c) removing phenol while continuing to heat said reaction mixture to form said polyester carbonate.

10. A method for the polymerization of a polyester-carbonate as defined in Claim 8 wherein the reaction mixture includes lithium hydroxide as a catalyst.

11. A method for the polymerization of a polyester-carbonate as defined in Claim 9 wherein the mole ratio of ester reactant to carbonate reactant is from 50-95 mole % to 5-50 mole %.

12. A method for the polymerization of a polyester-carbonate wherein the mole ratio of terephthalate to isophthalate is from 50:50 mole % to 0-100 mole%.

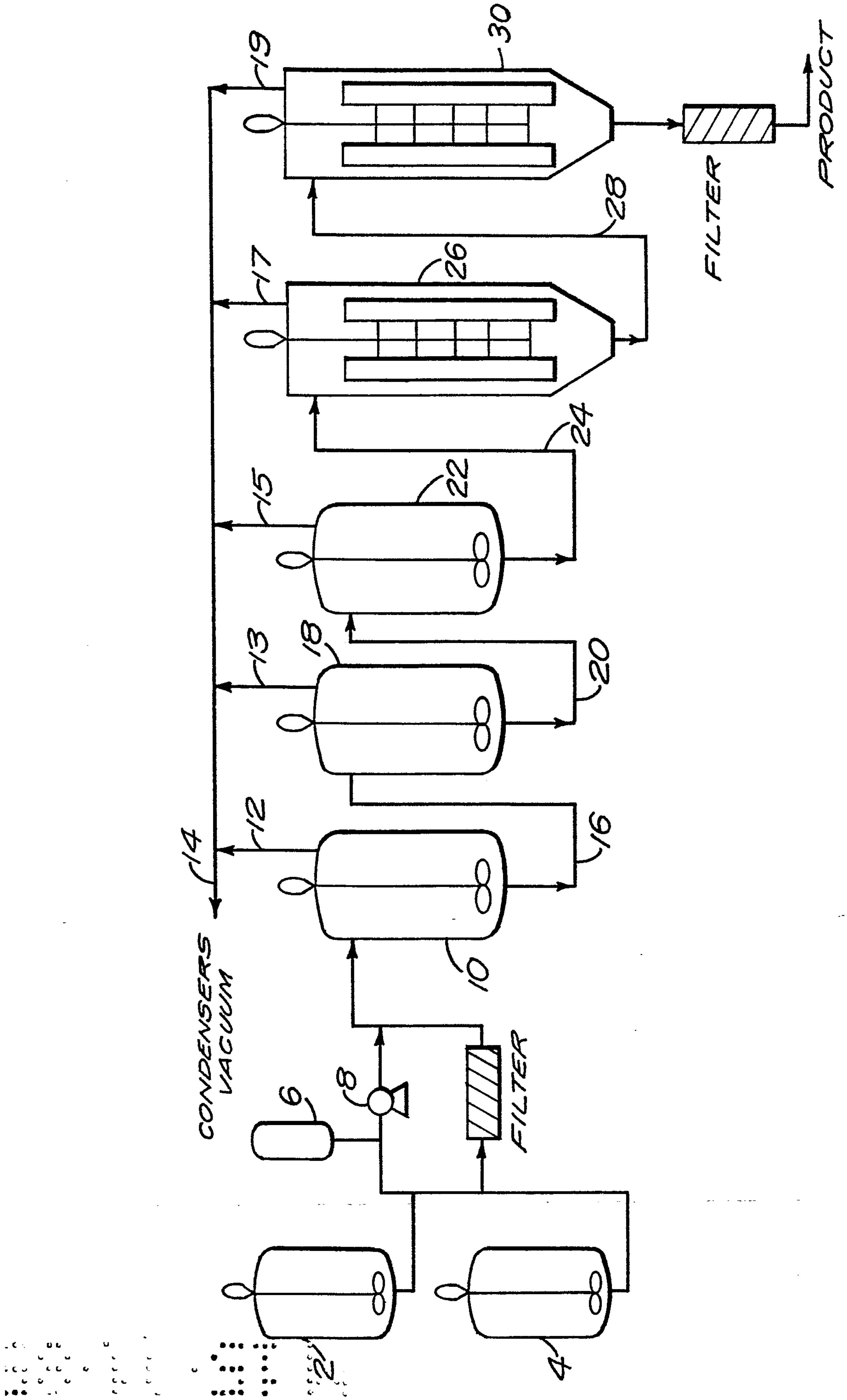
2
4
6
8
FILTER
10
12
13
14
15
16
17
18
19
20
22
24
26
28
30
CONDENSERS VACUUM
FILTER
PRODUCT

European Patent Office

# EUROPEAN SEARCH REPORT

Application number

EP 85 10 0342

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int Cl 4) |
| Y | US-A-3 553 167 (H. SCHNELL et al.) * Claims 1-9 * | 1-12 | C 08 G 63/64 |
| D,Y | US-A-3 169 121 (E.P. GOLDBERG) * Claim 1; column 4, lines 44-53 * | 1-12 | |
| X | GB-A-1 073 580 (CHEMISCHE WERKE WITTEN) * Claims 1-21; example 1 * | 1-12 | |
| A | EP-A-0 002 218 (BAYER) * Claims 1-5 * | 1-12 | |
| A | US-A-4 360 648 (W.J. JACKSON AND W.R. DARNELL) * Claims 1-8 * | 1-12 | TECHNICAL FIELDS SEARCHED (Int Cl 4) |
| A | US-A-4 329 443 (D.J. BRUNELLE) * Claims 1-7 * | 1-12 | C 08 G |

The present search report has been drawn up for all claims

| Place of search | Date of completion of the search | Examiner |
|---|---|---|
| THE HAGUE | 08-05-1985 | DECOCKER L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document